# EUROPEAN PATENT SPECIFICATION

(11) **EP 0 469 623 B1**
(45) Date of publication and mention of the grant of the patent: **08.05.1996**
(21) Application number: 91112995.5
(22) Date of filing: 02.08.1991
(51) Int. Cl.: G11B 11/10

(54) **Optical magnetic disk**
Magnetooptische Platte
Disque magnéto-optique

(30) Priority: 03.08.1990 KR 1194290
(43) Date of publication of application: 05.02.1992
(73) Proprietor: GOLDSTAR CO. Ltd., Seoul (KR)
(72) Inventor: Hyuk, Moon, Dongdaemoon-Gu, Seoul (KR)
(74) Representative: Cohausz & Florack Patentanwälte

(56) References cited:
- EP-A- 0 139 474
- EP-A- 0 152 269
- EP-A- 0 239 390
- EP-A- 0 365 333
- PATENT ABSTRACTS OF JAPAN vol. 10, no. 213 (E-422) 25 July 1986 & JP-A-61 053 702
- PATENT ABSTRACTS OF JAPAN vol. 11, no. 32 (P-541) 30 January 1987 & JP-A-61 202 352

## Description

The invention is related to provide an optical magnetic disk, and particularly to improve the magnetic optical characteristics of a disk structure.

Conventionally, a nitride or an oxide dielectric layer is well known as materials made into a protection thin film or an anti-reflection thin film, both of which are manufactured using the sputtering plating method.

An optical disk with anti-reflection layer is known from prior art EP-A- 0 139 474. The first layer is a SiN film having an index of refraction of about 2.0 and the second layer is an Al II film having an index of refraction of about 1,8 to 1,9.

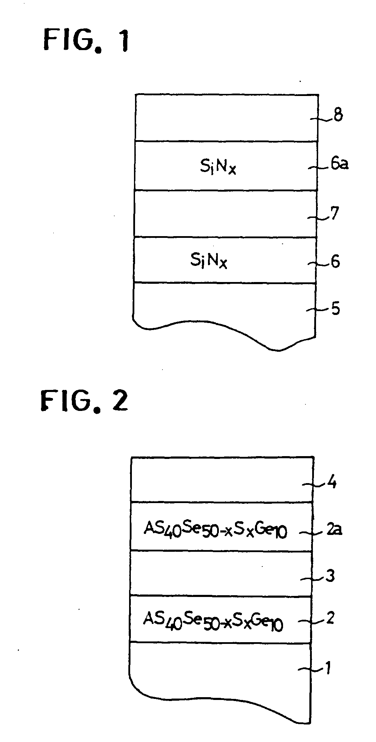

As shown in Fig.1, the conventional optical magnetic disk includes a substrate (or a transparent PC board) 5. A first anti-reflection layer 6, which a nitride dielectric layer is subject to be SiNx, is coated by a proper thickness of about 800-1000Å on the sustrate 5, on which a recordation layer 7 is covered by about 300Å using an amorphous RE-TM alloy, such as Tb, Fe and Co etc..

Also, a second anti-reflection layer 6a corresponding to a nitride dielectric layer of SiNx is covered on the recordation layer 7. A reflection layer 8, which is belonging to metals, such as Aluminum (AL), Chrome (Cr) and Titan (Ti) etc., is formed on the second anti-reflection layer 6a. Such like a structure can obtain a Kerr rotation angle (θk) and a Faraday effect (θf) resulting from features of an amorphous RE-TM material which is used at the recordation layer 7.

At that case, the laser beam passing through the substrate 5 reaches the surface of the recordation layer 7 through the first anti-reflection layer 6, on which is partly reflected to contribute to enhance the Kerr rotation angle (θk) and through which is partly transmitted to contribute to improve the Faraday effect (θf). Then, the reflective index, the permeability and the thickness of the first and the second anti-reflection layers 6 and 6a badly affect the Kerr rotation angle (θk) and the Faraday effect (θf).

But the material of SiNx or SiO having been used as the first anti-reflection layer 6 and the second anti-reflection layer 6a has a problem that the reflective index (n) adapting to the Kerr rotation (θk) and the Faraday effect (θf) is relatively lower by about 1.5-2.0.

That is to say, the larger the reflective index (n) of materials used in the first and the second anti-reflection layers 6 and 6a is becoming, the more the Kerr rotation angle (θk) and the Faraday effect (θf) will be increased, still the inherently inferior reflective index of SiNx or SiO deteriorates the magnetic optical characteristics.

Accordingly, the main object of the invention is to provide an optical magnetic disk using materials of higher reflective index (n) contributing to an anti-reflection layer so as to improve the Kerr rotation angle (θk) and the Faraday effect (θf).

### SUMMARY OF THE INVENTION

According to the invention, an optical magnetic disk having an anti-reflection layer thereon comprises a first and a second anti-reflection amorphous thin film layer coated on the upper and the lower size of a recordal layer respectively, for enhancing the Kerr rotation angle (θk) and for improving the Faraday effect (θf), respectively, characterized in that the amorphous thin film of each of the anti-reflection layers (2,2a) is composed of AS₄₀ Se₅₀₋ₓ Sₓ Ge₁₀, in which X is extended over 15 to 40, and the reflective index (11) is in the range of 2,5 to 2,7.

Preferably, the thickness of the first anti-reflection layer is remaining 600-660Å, the thickness of the second anti-reflection layer defines the scope of 250 to 350Å, and the Kerr rotation angle (θk) of the amorphous thin film is 1.55° at maximum.

### BRIEF DESCRIPTION OF THE DRAWINGS

The invention will be described in detail below by reference to the accompanying drawings, in which:
Fig.1 is a view showing a conventional optical magnetic disk;
Fig.2 is a view showing an optical magnetic disk according to the invention;
Fig.3 is a graph illustrating the varying in the permeability of an optical magnetic disk according to the invention; and,
Fig.4 is a graph illustrating the comparation of the Kerr rotation angle (θk) between the invention and the conventional optical magnetic disk.

### DETAIL DESCRIPTION OF THE INVENTION

Fig.2 is a view showing an optical magnetic disk of the invention. The optical magnetic disk comprises a first anti-reflection layer 2 forming by about 600-660 Å in a sputtering method on a substrate 1, which is AS₄₀Se₂₀S₃₀Ge₁₀ obtained from AS₄₀Se₅₀-xSxGe₁₀ called a dielectric material, a recordation layer 3 covering a metal alloy, such as Tb, Fe and Co etc. by about 250Å on the first anti-reflection layer 2, a second anti-reflection layer 2a coating any one of dielectric materials, such as AS₄₀Se₂₀ S₃₀Ge₁₀, by about 250-350Å on the recordation layer 3 and a reflection layer 4 laying a metal alloy, such as Al by about 600Å on the second anti-reflection layer 2a.

The optical magnetic disk according to the invention has the preferred embodyfying configuration as follows:

The radiations of the laser beam firstly transmit through the first anti-reflection layer 2 of a dielectric thin film AS₄₀ Se₂₀S₃₀Ge₁₀, and then reflect on the recordation layer of a thin film made of a metal alloy, such as Tb, Fe and Co, thereby improving the Kerr rotation angle (θk).

On the other hand, the larger the reflective index of the first anti-reflection layer 2 gets, the more the Kerr rotation angle (θk) improves. Therefore the thin film of AS₄₀Se₂₀S₃₀Ge₁₀ used in this embodiment has the reflective index of 2.6, so that the sufficient Kerr rotation angle (θk) may be obtained.

Specially, the embodiment of the invention has the reflective index of a thin film referring to as AS₄₀Se₂₀S₃₀Ge₁₀ representing 2.6 and the higher permeability representing 90 to 91% in the wavelength of 780nm - 830nm.

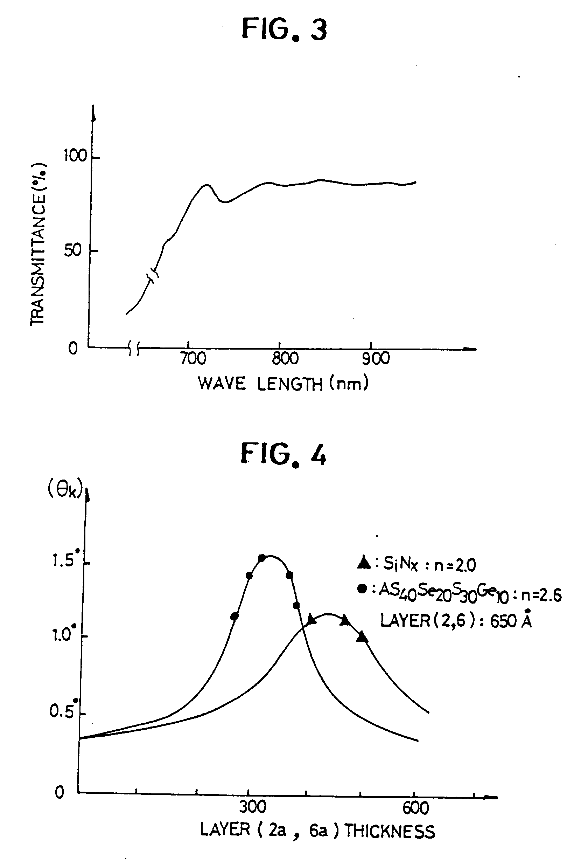

As shown in Fig.3, the invention reveals higher permeability in the wavelength of semiconductor lasers which are used as the reading-out optical source.

Also, the laser beams developing the Faraday effect (θf) through the recordation layer 3 reflect on the reflection layer 4 after passing through the second anti-reflection layer 2a made of a dielectric. Similarlly, the larger the reflective index (n) of the second anti-reflection layer 2a increases, the more the Faraday effect (θf) enhances. Thus, the embodiment of the invention as shown in Fig.4 can obtain the higher Kerr rotation angle (θk) shown by the marks ● than the maximum one of an anti-reflection layer danger made into a previous dielectric layer indicated by the mark ▲, in which the maximum value of the Kerr rotation angle (θf) is respectively 1.2° belonging to the prior art and 1.55° corresponding to the embodiment.

As described above, the invention has an anti-reflection layer formed as the thin film of AS₄₀ Se₅₀-xSxGe₁₀ , so that nevertheless the permeability in the range of the visual light beam -is inferior, the permeability in the wavelength of semiconductor laser beams adapting for the reading light source of an optical magnetic disk represents relatively higher to have the superior recordation sensitivity. Furthermore, the invention has the higher reflective index (n) to improve the Kerr rotation angle (θk) more than that of the previously used materials.

## Claims

1. An optical magnetic disk having an anti-reflection layer thereon, comprising
- a first (2) and a second (2a) anti-reflection amorphous thin film layer coated on the upper and the lower side of a recordal layer (3), respectively, for enhancing the Kerr rotation angle (θk) and for improving the Faraday effect (θf), respectively,
characterized in that the amorphous thin film of each of the anti-reflection layers (2, 2a) is composed of As₄₀Se₅₀₋ₓSₓGe₁₀, in which x is extended over 15 to 40, and the reflective index (n) is in the range of 2,5 to 2,7.

2. An optical magnetic disk as claimed in claim 1 characterized in that the thickness of the first anti-reflection layer (2) is 6·10⁻⁸-6,6·10⁻⁸m (600-660Å), and the thickness of the second anti-reflection layer (2) is between 2,5·10⁻⁸m and 3,5·⁻⁸m (250 to 350Å).

3. An optical magnetic disk as claimed in claim 1 or claim 2 characterized in that the Kerr rotation angle (θk) of the amorphous thin film is 1.55° at maximum.

## Patentansprüche

1. Magnetooptische Platte mit einer darauf befindlichen Antireflexionsschicht mit
- einer ersten (2) und einer zweiten (2a) amorphen Dünnfilmantireflexionsschicht, mit der die obere und untere Seite einer Aufzeichnungsschicht (3) beschichtet sind, um den Kerr-Rotationswinkel (θk) zu vergrößeren und den Faradayeffekt (θf) zu verbessern,
dadurch gekennzeichnet, daß der amorphe Dünnfilm einer jeder Antireflexionsschicht (2, 2a) aus As₄₀Se₅₀₋ₓSₓ Ge₁₀ besteht, wobei sich x über 15 bis 40 erstreckt und der Reflexionsindex (n) in einem Bereich von 2,5 bis 2,7 liegt.

2. Magnetooptische Platte nach Anspruch 1, dadurch gekennzeichnet, daß die Dicke der ersten Antireflexionsschicht (2) 6·10⁻⁸-6,6·10⁻⁸m (600-660Å) beträgt und daß die Dicke der zweiten Antireflexionsschicht (2a) zwischen 2,5·10⁻⁸m und 3,5·⁻⁸m (250-350Å) liegt.

3. Magnetooptische Platte nach Anspruch 1 oder 2, dadurch gekennzeichnet, daß der Kerr-Rotationswinkel (θk) des amorphen Dünnfilms maximal 1,55° beträgt.

## Revendications

1. Disque magnéto-optique comportant une couche antireflet, comportant
- une première couche (2) et une seconde couche (2a) en forme de films minces amorphes antiréfléchissants, déposés respectivement sur les faces supérieure et inférieure d'une couche d'enregistrement (3) pour respectivement augmenter l'angle de rotation Kerr (θk) et améliorer l'effet Faraday (θf),
caractérisé en ce que le film mince amorphe de chacune des couches antireflet (2,2a) est constitué de As₄₀Se₅₀₋ₓSₓGe₁₀, x étant compris entre 15 et 40, tandis que le coefficient de réflexion (n) est situé dans la gamme de 2,5 à 2,7.

2. Disque magnéto-optique selon la revendication 1, caractérisé en ce que l'épaisseur de la première couche antireflet (2) est égale à 6.10⁻⁸-6,6.10⁻⁸ m (600-660 Å), et l'épaisseur de la seconde couche antireflet (2) est comprise entre 2,5.10⁻⁸ m et 3,5.10⁻⁸ m (250 à 350 Å).

3. Disque magnéto-optique selon la revendication 1 ou 2, caractérisé en ce que l'angle de rotation Kerr (θk) du film mince amorphe est égal au maximum à 1,55°.
